# EUROPÄISCHE PATENTSCHRIFT

(11) **EP 2 839 601 B1**
(45) Veröffentlichungstag und Bekanntmachung des Hinweises auf die Patenterteilung: **21.10.2015**
(21) Anmeldenummer: 13717215.1
(22) Anmeldetag: 04.04.2013
(51) Int. Cl.: H04L 9/06, H04L 9/32, H04L 29/06, G05B 19/418, G06F 11/10, G06F 21/60, H03M 13/09, H04L 12/40

(54) **FELDBUS-DATENÜBERTRAGUNG**
FIELD BUS DATA TRANSMISSION
TRANSMISSION DE DONNÉES PAR BUS DE TERRAIN

(30) Priorität: 17.04.2012 DE 102012206272
(43) Veröffentlichungstag der Anmeldung: 25.02.2015
(73) Patentinhaber: Beckhoff Automation GmbH, 33415 Verl (DE)
(72) Erfinder: WIECZOREK, Felix, 81679 München (DE); SCHILLER, Frank, 90409 Nürnberg (DE)
(74) Vertreter: Patentanwaltskanzlei WILHELM & BECK
(86) Internationale Anmeldenummer: PCT/EP2013/057077
(87) Internationale Veröffentlichungsnummer: WO 2013/156312

(56) Entgegenhaltungen:
- WO-A1-00/45562
- WO-A1-01/22873
- WO-A1-03/067452
- WO-A1-2006/053459

## Beschreibung

Die Erfindung betrifft ein Verfahren zum Übertragen von Informationen in Form von Datenpaketen in einem Feldbussystem zwischen wenigstens zwei Kommunikationsteilnehmern, einen Kommunikationsteilnehmer für ein solches Feldbussystem und das Feldbussystem als solches.

In der Industrieautomation werden technische Prozesse mit Hilfe von Rechnern gesteuert und überwacht. Die Feldgeräte, d.h. die Sensoren und Aktoren, sind mit Steuerungsrechnern über einen Feldbus kommunikationstechnisch verbunden. Der Feldbus ist in der Regel echtzeitfähig.

Eine wesentliche Anforderung an Feldbussysteme ist die Fehlersicherheit bei der Übertragung von Informationen zwischen Feldgeräten und Steuerungsrechnern. In der Industrieautomation muss beim Steuern und Überwachen von technischen Prozessen sichergestellt sein, dass dann, wenn das Feldbussystem fehlerhaft arbeitet, keine Gefahr für Mensch und Umwelt besteht. Feldbussysteme arbeiten deshalb in der Regel nach dem sogenannten Fail-Safe-Prinzip, gemäß dem das Feldbussystem im Fehlerfall wichtiger Komponenten in einen sicheren Zustand übergeht. Um beim Ausführen solcher sicherheitsrelevanter Steuerfunktionen zu gewährleisten, dass der Datenaustausch zwischen den Feldgeräten und den Steuerungsrechnern nicht verfälscht oder zumindest erkennbar verfälscht erfolgt, werden sogenannte Safety-Maßnahmen auf dem Feldbus implementiert. Zielsetzung der hierbei ergriffenen Safety-Maßnahmen ist es, Fehler bei der Nutzdatenübertragung mit hoher Wahrscheinlichkeit aufzudecken, um die Gefahr unerkannter Fehler zu minimieren. Im Fokus dieser Safety-Maßnahmen stehen dabei vor allem die zufälligen Fehler, die bei der Datenübertragung auftreten.

Als Safety-Maßnahme führen die Kommunikationsteilnehmer im Feldbussystem in der Regel ein Prüfsummenverfahren (z. B. Cyclic Redundancy Check - CRC) durch, bei dem vor einer Datenübertragung aus den Nutzdaten eine Prüfsumme berechnet wird, die dann in einem Datenpaket, beispielsweise zusammen mit den Nutzdaten, übertragen wird. Zur Überprüfung einer fehlerfreien Datenübertragung wird auf der Empfängerseite ein entsprechendes Berechnungsverfahren auf die empfangenen Nutzdaten und die empfangene Prüfsumme angewandt. Dem Berechnungsergebnis kann dann entnommen werden, ob die Datenübertragung unverfälscht stattgefunden hat.

Neben der Notwendigkeit zur Aufdeckung zufälliger Fehler bei der Datenübertragung tritt zunehmend auch die Problemstellung auf, die Integrität der im Feldbussystem übertragenen Information gegen Angriffe zu sichern. Zielsetzung solcher sogenannter Security-Maßnahmen ist es, vor allem die Information vor unautorisierten Änderungen zu schützen. Ferner sollen mit weiteren Security-Maßnahmen oft zusätzlich die Vertraulichkeit der Daten vor unautorisiertem Lesen sichergestellt werden. Dabei werden in der Regel kryptographische Verfahren eingesetzt, um die Informationssicherheit in Bezug auf Angriffe zu gewährleisten. Um in Feldbussystemen zwischen den Kommunikationsteilnehmern für einen schnellen Datenaustausch zum Ausführen von Echtzeitsteueraufgaben zu sorgen, können symmetrische kryptographische Verfahren eingesetzt werden, bei denen mehrere Kommunikationsteilnehmer den gleichen Schlüssel verwenden.

Bei Feldbussystemen werden üblicherweise aufgrund der unterschiedlichen Zielsetzungen von Fehlersicherheit und Informationssicherheit die Safety- bzw. Security-Maßnahmen unabhängig voneinander entwickelt und umgesetzt. Bei einer Kombination von Safety- und Security-Verfahren besteht jedoch das Problem, dass die Vorgehensweisen sich gegenseitig beeinflussen und zu nicht vollständigem Erreichen der Schutzziele führen können. Bei Safety-Maßnahmen in Feldbussystemen wird in der Regel das sogenannte Black-Channel-Prinzip angewandt, bei dem die Kommunikationsteilnehmer jeweils eine Fehlersicherungsschicht besitzen, die das Übertragungsverhalten auf dem Feldbus und gegebenenfalls auf dem Feldbus ausgeführte Security-Maßnahmen völlig unberücksichtigt lässt, was dazu führt, dass eventuell Beeinträchtigungen der Güte nicht adäquat in den Nachweisen berücksichtigt werden.

Bei der Fehlerbetrachtung im Rahmen von Safety-Maßnahmen wird der Feldbus ferner als binärer symmetrischer Kanal angesehen, auf dem die Zeichen unabhängig voneinander und mit der gleichen Wahrscheinlichkeit verfälscht werden, so dass die Wahrscheinlichkeit einer Falschübertragung des Zeichens 1 genauso hoch ist wie die Falschübertragung des Zeichens 0. Eine Security-Schicht, in der die Daten ver- bzw. entschlüsselt werden, verändert jedoch den Kommunikationskanal so, dass die Annahme vom binären symmetrischen Kanal nicht mehr ohne weiteres zutrifft. Da bei einer Verschlüsselung in der Regel eine pseudozufällige Gleichverteilung der verschlüsselten Daten angestrebt wird, kann das Problem auftreten, dass die bei Safety-Maßnahmen geforderten deterministischen Kriterien wie z. B. die Hamming-Distanz nicht mehr eingehalten werden. Die Hamming-Distanz gibt an, wieviele Zeichen in einem Datensatz mindestens verfälscht sein müssen, damit bezüglich der Safety-Maßnahmen eine unerkannte Verfälschung überhaupt auftreten kann.

In Feldbussystemen muss eine Durchgängigkeit der Safety-Maßnahmen im Feldbussystem vom Sender zum Empfänger gewährleistet sein. Wenn beim Senden die Security-Maßnahmen vor den Safety-Maßnahmen in den Kommunikationsteilnehmern des Feldbussystems ausgeführt werden, müssten deshalb diese Security-Maßnahmen zum Gewährleisten einer Fehlersicherheit durch weitere Safety-Maßnahmen, z. B. zusätzliche Redundanzen, gesichert werden.

Es besteht grundsätzlich nicht die Möglichkeit, mit den Safety-Maßnahmen zusätzlich die Security-Anforderungen zu erfül len bzw. umgekehrt mit den Security-Maßnahmen die Safety-Anforderungen umzusetzen. Safety-Maßnahmen, bei denen für die Nutzdaten eine Prüfsumme bestimmt wird, die übertragen und beim Empfänger verifiziert wird, könnten zwar eine Manipulation der übertragenen Daten erschweren. Eine Anpassung der Prüfsumme an manipulierte Nutzdaten ist für einen Angreifer jedoch in der Regel immer noch möglich, so dass mit den Safety-Maßnahmen die Security-Anforderungen nicht erfüllt werden können. Umgekehrt kann versucht werden, die Safety-Anforderungen mit Security-Maßnahmen zu erfüllen, weil auch zufällige Fehler mit einer bestimmten Wahrscheinlichkeit aufgedeckt werden. Diese Security-Maßnahmen genügen jedoch nicht den Safety-Anforderungen, da die deterministischen Fehleraufdeckungskriterien nicht erfüllt werden.

Aus der US 2007/0061674 A1 ist eine Datenübertragung bekannt, bei der eine Security-Maßnahme in eine Safety-Maßnahme eingebettet ist, und zwar indem im sendenden Kommunikationsteilnehmer zuerst eine CRC-Prüfung und dann eine Verschlüsselung und im empfangenden Kommunikationsteilnehmer zuerst die Entschlüsselung und dann die CRC-Prüfung durchgeführt wird. Aus der US 2003/0223585 A1 und der DE 10 2010 033 229 A1 sind Datenübertragungsverfahren bekannt, bei denen als Security-Maßnahmen sowohl eine Verschlüsselung als auch eine Authentifizierung zur Sicherung der Datenintegrität durchgeführt werden.

Weiterer Stand der Technik ist der WO 03/067452 A1, der WO 00/45562 A1 und der WO 01/22873 A1 zu entnehmen.

Aufgabe der Erfindung ist es, auf einfache Weise bei Feldbussystemen sowohl Safety- als auch Security-Anforderungen zu erfüllen.

Diese Aufgabe wird mit einem Verfahren gemäß Anspruch 1, einen Kommunikationsteilnehmer gemäß Anspruch 6 und einem Feldbussystem gemäß Anspruch 11 gelöst. Bevorzugte Weiterbildungen sind in den abhängigen Ansprüchen angegeben. Erfindungsgemäß wird zum Übertragen von Information in Form von Datenpaketen in einem Feldbussystem zwischen wenigstens zwei Kommunikationsteilnehmern, die jeweils eine Sicherheitsschicht mit einer Fehlersicherungsschicht, die Daten gegen Datenübertragungsfehler sichert, und einer Informationssicherungsschicht, die Daten gegen Manipulation und/oder unautorisiertes Lesen sichert, aufweisen, im Sendebetrieb der Kommunikationsteilnehmer die Daten im Kommunikationsteilnehmer zuerst in der Fehlersicherungsschicht und dann in der Informationssicherungsschicht und im Empfangsbetrieb zuerst in der Informationssicherungsschicht und dann in der Fehlersicherungsschicht verarbeitet.

Mit dieser erfindungsgemäßen Vorgehensweise, bei der die Safety- und Security-Maßnahmen als zwei getrennte Schichten ausgeführt sind, die im Kommunikationsteilnehmer im Sendevorgang der Feldbus-Protokollschicht vorgeschaltet bzw. im Empfangsbetrieb dieser Protokollschicht nachgeschaltet sind, können robust sowohl die Safety-Anforderungen, Datenübertragungsfehler mit hoher Wahrscheinlichkeit aufzudecken, als auch die Security-Anforderungen, Manipulationen an den Daten festzustellen und/oder unautorisiertes Lesen zu verhindern, erfüllt werden. Durch das Vorsehen der Fehlersicherungsschicht am Anfang bzw. am Ende der Datenübertragungsstrecke kann die Durchgängigkeit der Safety-Maßnahmen sichergestellt werden. Durch das direkte Nachschalten der Informationssicherungsschicht im Sendebetrieb bzw. des direkten Vorschaltens der Informationssicherungsschicht im Empfangsbetrieb können bei der Auslegung der Security-Maßnahmen die Safety-Anforderungen berücksichtigt werden.

Die erfindungsgemäße Auslegung der Kommunikationsteilnehmer hat ferner den Vorteil, dass die Daten in der Fehlersicherungsschicht und in der Informationssicherungsschicht schnell und ressourcensparend verarbeitet werden, wodurch sich die Echtzeitfähigkeit des Feldbussystems garantieren lässt. Gleichzeitig erlaubt die vorgesehene Architektur einen flexiblen Austausch der im Rahmen der Safety- bzw. Security-Maßnahmen eingesetzten Verarbeitungsprozesse, wodurch sich die geforderten Safety- und Security-Maßnahmen einfach und schnell an neue Anforderungen anpassen lassen.

Gemäß einer bevorzugten Ausführungsform bestimmt die Fehlersicherungsschicht des sendenden Kommunikationsteilnehmers für die Nutzdaten eine Prüfsumme, wobei die Fehlersicherungsschicht im empfangenden Kommunikationsteilnehmer eine entsprechende Berechnung auf die Daten anwendet. Mit dieser Vorgehensweise kann die Datenintegrität in Bezug auf die Aufdeckung von zufälligen Fehlern bei der Datenübertragung nachweisbar gewährleistet werden. Insbesondere lassen sich mit dieser Vorgehensweise auf einfache Weise die Safety-Anforderungen hinsichtlich der Restfehlerwahrscheinlichkeit und deterministischer Kriterien wie die Hamming-Distanz erfüllen.

Gemäß einer weiteren bevorzugten Ausführungsform erzeugt die Informationssicherungsschicht des sendenden Kommunikationsteilnehmers für die zu übertragenen Daten und für einen vorgegebenen Schlüssel und/oder einen internen Zustand nach einem vorgegebenen Authentifikation-Berechnungsverfahren einen Authentifikationsprüfwert, der ebenfalls übertragen wird, wobei die Informationssicherungsschicht des empfangenen Kommunikationsteilnehmers für die empfangenen Daten einen weiteren Authentifikationsprüfwert berechnet, um durch Vergleich des weiteren Authentifikationsprüfwerts mit dem übertragenen Authentifikationsprüfwert eine Aussage über die Datenintegrität zu treffen. Mit dieser Vorgehensweise wird mit ausreichend hoher Wahrscheinlichkeit eine Datenintegrität in Bezug auf die Aufdeckung von Datenmanipulationen erreicht. Mit dieser Vorgehensweise wird außerdem der Empfang von Daten in der selben Reihenfolge, wie sie gesendet wurden, mit ausreichend hoher Wahrscheinlichkeit sichergestellt. Dadurch werden unter anderem ein Löschen und/oder ein Wiedereinspielen von Daten erkannt. Gleichzeitig können die Security-Maßnahmen mit den Safety-Maßnahmen kombiniert werden, ohne dass die Güte der Safety-Maßnahmen davon beeinflusst wird. Die Restfehlerwahrscheinlichkeit und die deterministischen Kriterien, wie Hamming-Distanz, bleiben durch die Maßnahmen der Informationssicherungsschicht unbeeinflusst.

Gemäß einer weiteren bevorzugten Ausführungsform umfasst die Informationssicherungsschicht eine Vertraulichkeitssicherungsschicht, mit der die Vertraulichkeit der Daten garantiert wird. Durch das Vorsehen dieser zusätzlichen Vertraulichkeitsschicht im Rahmen der Informationssicherungsschicht kann eine zusätzliche Sicherung der Daten gegenüber unautorisiertem Lesen erreicht werden. Gleichzeitig bleibt die Verarbeitung in der Fehlersicherungsschicht durch diese zusätzliche Vertraulichkeitssicherungsschicht unbeeinflusst, so dass die Safety-Anforderungen weiterhin erfüllt bleiben.

Die Vertraulichkeitssicherungsschicht des sendenden Kommunikationsteilnehmers führt vorzugsweise eine Exklusiv-Oder-Überlagerung (XOR) der Daten mit einem pseudozufälligen Schlüsselstrom durch, wobei die Vertraulichkeitssicherungsschicht des empfangenden Kommunikationsteilnehmers wieder eine XOR-Überlagerung der empfangenen Daten mit demselben Schlüsselstrom durchführt. Dieses symmetrische Vorgehen bei der Verschlüsselung ermöglicht eine schnelle und ressourcensparende Verarbeitung, wodurch die Echtzeitfähigkeit des Feldbussystems nicht beeinflusst wird. Vorzugsweise wird dabei zum Bestimmen des Authentifikationsprüfwerts eine Partition desselben Schüsselstroms verwendet, die sich nicht mit der Partition des Schlüsselstroms überdeckt, die im Rahmen der Vertraulichkeitssicherungsschicht genutzt wird, was den Schlüsselaustausch zwischen den Kommunikationsteilnehmern vereinfacht und eine schnelle Verarbeitung ermöglicht.

Die Erfindung wird anhand der beigefügten Zeichnungen näher erläutert.
- Figur 1: zeigt schematisch im Modell den Aufbau eines erfindungsgemäßen Feldbussystems mit zwei Kommunikationsteilnehmern; und
- Figur 2: eine Datenübertragung bei dem in Figur 1 gezeigten Feldbussystem mit dabei beispielhaft durchgeführten Safety- und Security-Maßnahmen.

Moderne Konzepte der Industrieautomation, d.h. der Steuerung und Überwachung von technischen Prozessen mit Hilfe von Software, beruhen auf der Idee einer Steuerung mit einer verteilten Sensor-/Aktor-Ebene. Die Kommunikationsteilnehmer kommunizieren dabei untereinander und mit übergeordneten Systemen über lokale Kommunikationsnetzwerke. Die in der Industrieautomation eingesetzten Netzwerke sind in der Regel Feldbussysteme, bei denen die Feldgeräte, d.h. die Sensoren und Aktoren, mit Steuerungsrechnern über einen gemeinsamen Übertragungsweg verbunden sind. Das Übertragungsnetzwerk kann dabei in unterschiedlicher Topologie, z.B. als Ring-, Stern-, Linien- oder Baumtopologie ausgeführt sein.

Moderne Feldbussysteme nutzen Protokolle, die ein Echtzeitverhalten aufweisen, und erzielen kurze Zykluszeiten mit niedrigem Jitter bei der Anlagensteuerung. Zentrale Anforderung an die Feldbussysteme ist eine sichere und zuverlässige Datenübertragung. Beim Einsatz von Feldbussystemen zur Steuerung und Überwachung von Maschinen ist eine sichere und zuverlässige Datenübertragung zwischen den Steuerungsrechnern und den Feldgeräten, d.h. den Sensoren und Aktoren, zu gewährleisten. So muss sichergestellt werden, dass die Information, repräsentiert durch Nutzdaten, zwischen den Kommunikationsteilnehmern im Feldbussystem ohne Fehler übertragen oder dass Fehler erkannt werden. Hierzu sind im Feldbussystem Safety-Maßnahmen vorgesehen, die gewährleisten, dass Fehler, insbesondere zufällige Fehler, mit hoher Wahrscheinlichkeit entdeckt werden, d.h. eine geringe Restfehlerwahrscheinlichkeit verbleibt. Dabei soll auch mit den Safety-Maßnahmen erreicht werden, dass bestimmte Fehlermuster zuverlässig detektiert werden, um so u. a. eine vorbestimmte Hamming-Distanz einhalten zu können, die die Anzahl an Zeichen angibt, die mindestens verfälscht sein müssen, damit ein verfälschter Datensatz existiert, der nicht als fehlerhaft erkannt wird.

Zusätzlich muss bei Feldbussystemen auch sichergestellt sein, dass unautorisiertes Lesen der übertragenen Informationen und/oder eine Manipulation dieser Informationen verhindert wird. Die hierbei in Feldbussystemen eingesetzten Security-Maßnahmen verhindern unautorisiertes Lesen der übertragenen Informationen und/oder eine Manipulation dieser Informationen durch Anwendung kryptographischer Verfahren auf die zwischen den Kommunikationsteilnehmern im Feldbussystem übertragenen Daten.

Bei der Durchführung von Safety- und Security-Maßnahmen im Feldbussystem kann das Problem bestehen, dass aufgrund der unterschiedlichen Anforderungen an die Datenintegrität, d.h. bei den Safety-Maßnahmen das Aufdecken von Datenübertragungsfehlern und bei den Security-Maßnahmen das Aufdecken von Datenmanipulationen und/oder unautorisiertes Lesen, die eingesetzten Maßnahmen sich gegenseitig in ihrer Wirksamkeit einschränken. Um dies zu verhindern, wird im Feldbussystem ein Aufbau gewählt, bei dem die physikalische Übertragungsschicht des Feldbusses in den angeschlossenen Kommunikationsteilnehmern über eine Sicherungsschicht an die Anwendung angebunden ist. Dieser Sicherungsschicht unterlagert ist eine Feldbusschicht, die den Zugriff auf das Übertragungsmedium regelt und den Datenstrom in Datenpakete gemäß dem eingesetzten Protokoll umsetzt. Über der Feldbusschicht ist als erster Teil der Sicherungsschicht eine Informationssicherungsschicht, die die Security-Maßnahmen ausführt, vorgesehen und als zweiter Teil eine Fehlersicherungsschicht, die die Safety-Maßnahmen enthält.

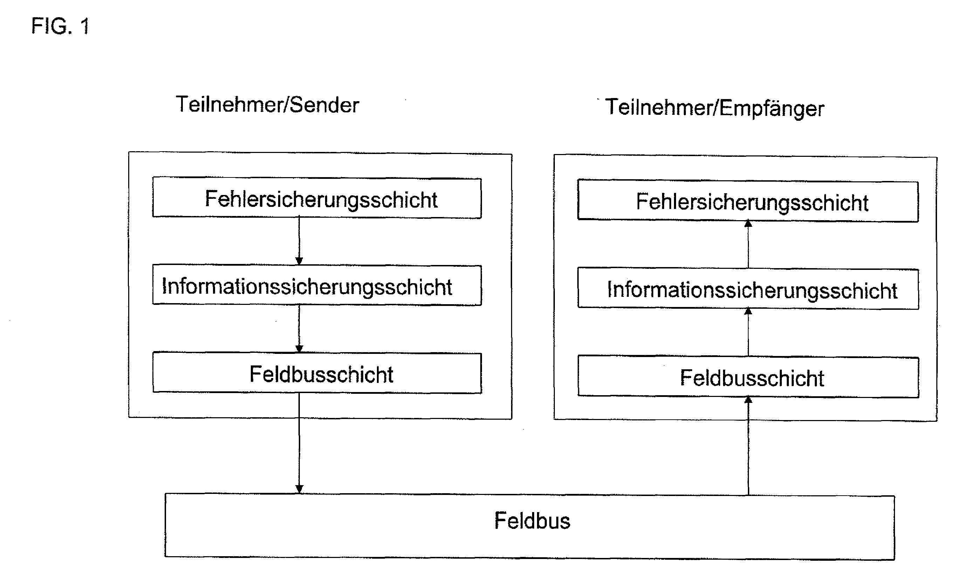

Bei einer Übertragung von Nutzdaten im Feldbussystem zwischen den Kommunikationsteilnehmern durchlaufen die Nutzdaten, wie in Figur 1 gezeigt, im Sender zuerst die Fehlersicherungsschicht und dann die Informationssicherungsschicht, um dann in der Feldbusschicht vom entsprechenden Feldbusprotokoll in Datenpakete umgesetzt und auf den Feldbus ausgegeben zu werden. Im Empfänger durchlaufen die Daten dann die Schichten in umgekehrte Reihenfolge. Die empfangenen Datenpakete der Feldbusschicht werden an die Informationssicherungsschicht weitergegeben, die nach Anwendung der Security-Maßnahmen die Daten dann zur Weiterverarbeitung an die Fehlersicherungsschicht, die die Safety-Maßnahmen durchführt, übergibt.

Die Entkopplung von Safety- und Security-Maßnahmen durch eine getrennte Verarbeitung in unabhängigen Schichten, nämlich der Fehlersicherungsschicht und der Informationssicherungsschicht, sorgt dafür, dass die Maßnahmen unabhängig voneinander durchgeführt werden können. Zugleich können die Safety- bzw. Security-Maßnahmen flexibel ausgetauscht und an neue Anforderungen angepasst werden.

Die vorgesehene Verarbeitungsreihenfolge im Sender, zuerst das Ausführen der Safety-Maßnahmen und dann der Security-Maßnahmen, und im Empfänger zuerst das Ausführen der Security-Maßnahmen und dann der Safety-Maßnahmen, sorgt für eine Durchgängigkeit der Safety-Maßnahmen, wodurch die Restfehlerwahrscheinlichkeit und die deterministischen Kriterien, wie Hamming-Distanz, eingehalten werden können.

In Bezug auf die in der Fehlersicherungsschicht eingesetzten Safety-Maßnahmen bzw. die in der Informationssicherungsschicht eingesetzten Security-Maßnahmen besteht grundsätzlich keine weitere Einschränkung. Als Safety-Maßnahme wird vorzugsweise ein Prüfsummenverfahren eingesetzt. Zur Erkennung von Übertragungsfehlern wird eine Prüfsumme aus den Nutzdaten berechnet. Ein solches Verfahren ist beispielsweise der CRC. Die Berechnung der Prüfsumme erfolgt beim CRC auf Basis einer Polynomdivision. Die Bitfolge der zu übertragenden Nutzdaten wird als binäres Polynom betrachtet, das durch ein Generatorpolynom geteilt wird, wobei ein Rest verbleibt. Dieser Rest ist dann die Prüfsumme, die beispielsweise an die Nutzdaten angehängt wird. Um zu verifizieren, ob eine fehlerfreie Datenübertragung erfolgt ist, werden die empfangenen Daten inklusive der Prüfsumme wiederum als binäres Polynom interpretiert und durch dasselbe Generatorpolynom wie beim Sender geteilt. Wenn sich der Rest 0 ergibt, wird davon ausgegangen, dass eine fehlerfreie Übertragung vorlag. Es gibt weitere Prüfsummenverfahren wie beispielsweise Längs- und Querparität, arithmetische Quersumme, mehrfaches Senden von Daten.

In der Informationssicherungsschicht werden bevorzugt symmetrische kryptographische Verfahren eingesetzt. Dabei wird in der Regel eine Stromverschlüsselung verwendet, bei der eine pseudozufällige Zeichenfolge, die aus dem vorgegebenen Schlüssel abgeleitet wird, erzeugt wird. Die Stromverschlüsselung eignet sich insbesondere für eine Echtzeitübertragung.

Gegen Manipulation erzeugt die Informationssicherungsschicht des sendenden Kommunikationsteilnehmers für die zu sendenden Daten und für einen vorgegebenen Schlüssel und/oder einen internen Zustand nach einem vorgegebenen Authentifikation-Berechnungsverfahren einen Authentifikationsprüfwert, der ebenfalls übertragen wird, wobei die Informationssicherungsschicht des empfangenen Kommunikationsteilnehmers für die empfangenen Daten einen weiteren Authentifikationsprüfwert berechnet, um durch Vergleich des weiteren Authentifikationsprüfwerts mit dem übertragenen Authentifikationsprüfwert eine Aussage über die Datenintegrität zu treffen. Mit dieser Vorgehensweise wird mit ausreichend hoher Wahrscheinlichkeit eine Datenintegrität in Bezug auf die Aufdeckung von Datenmanipulationen erreicht. Mit dieser Vorgehensweise wird außerdem der Empfang von Daten in derselben Reihenfolge, wie sie gesendet wurden, mit ausreichend hoher Wahrscheinlichkeit sichergestellt. Dadurch werden unter anderem ein Löschen und/oder ein Wiedereinspielen von Daten erkannt. Gleichzeitig können die Security-Maßnahmen mit den Safety-Maßnahmen genutzt werden, ohne dass die Güte der Safety-Maßnahmen davon beeinflusst wird. Die Restfehlerwahrscheinlichkeit und die deterministischen Kriterien, wie Hamming-Distanz, bleiben durch die Maßnahmen der Informationssicherungsschicht unbeeinflusst.

Die Informationssicherungsschicht kann zweiteilig ausgelegt sein, mit einer zusätzlichen Vertraulichkeitsschicht, die vorzugsweise eine Exklusiv-Oder-Überlagerung (XOR) der Daten mit einem pseudozufälligen Schlüsselstrom durchführt. Dieses symmetrische Vorgehen bei der Verschlüsselung ermöglicht eine schnelle und ressourcensparende Verarbeitung, wodurch die Echtzeitfähigkeit des Feldbussystems nicht beeinflusst wird. Vorzugsweise wird dabei zum Bestimmen des Authentifikationsprüfwerts eine Partition desselben Schüsselstroms verwendet, die sich nicht mit der Partition des Schlüsselstroms überdeckt, die im Rahmen der Vertraulichkeitssicherungsschicht genutzt wird, was den Schlüsselaustausch zwischen den Kommunikationsteilnehmern vereinfacht und eine schnelle Verarbeitung ermöglicht.

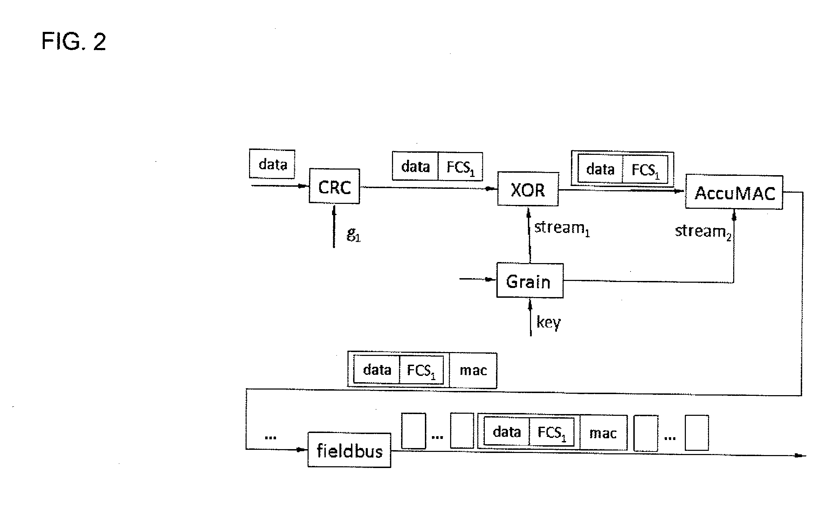

Figur 2 zeigt eine mögliche Ausgestaltung des Datenflusses bei dem in Figur 1 gezeigten Feldbussystem, wobei nur die Senderseite dargestellt ist. Die Nutzdaten data werden zuerst im sendenden Kommunikationsteilnehmer in dessen Fehlersicherungsschicht verarbeitet, wobei beispielsweise mit Hilfe eines Prüfsummenverfahrens CRC mit einem Generatorpolynom g1 eine Prüfsumme FCS1 erstellt wird, die den Nutzdaten data angefügt wird. In der Informationssicherungsschicht des sendenden Kommunikationsteilnehmers wird dann eine Verschlüsselung und ein Authentifikation-Berechnungsverfahren durchgeführt, wobei zwei disjunkte Partitionen stream1, stream2 eines pseudozufälligen Schlüsselstroms verwendet werden. Dieser Schlüsselstrom wird beispielsweise mit einem Algorithmus Grain aus einem Schlüssel Key oder einem internen Zustand abgeleitet. Die erste Partition stream1 wird dann mit den Nutzdaten data und der angehängten Prüfsumme FCS1 XOR-überlagert. Aus dem XOR-überlagerten Datenstrom mit Nutzdaten data und Prüfsumme FCS1 wird dann mit der zweiten Partition stream2 unter Anwendung beispielsweise eines Authentifikation-Berechnungsverfahrens AccuMAC ein Authentifikationsprüfwert mac erstellt, der dann den Daten angehängt wird.

Nach Umsetzung des so erzeugten Datensatzes aus XOR-überlagerten Nutzdaten data und Prüfwert FCS1 sowie dem Authentifikationsprüfwert mac in der Feldbusschicht in das auf dem Feldbussystem verwendete Übertragungsprotokoll wird der Datensatz dann in das Übertragungsmedium des Feldbussystems eingekoppelt und übertragen. Das Übertragungsmedium muss keine zusätzlichen Sicherungsmaßnahmen umfassen und kann somit ein ungesicherter Kommunikationskanal sein.

Im empfangenden Kommunikationsteilnehmer wird dann das übertragene Datenpaket von der zugehörigen Feldbusschicht nach Umsetzung gemäß dem auf dem Feldbussystem verwendeten Übertragungsprotokoll an die Informationssicherungsschicht zur Weiterverarbeitung übergeben. In der Informationssicherungsschicht wird dann mit dem Algorithmus Grain derselbe pseudozufällige Schlüsselstrom mit zwei Partitionen erzeugt, wobei mit der einen Partition eine Auswertung des Authentifikationsprüfwerts mac erfolgt und mit der anderen Partition anschließend eine XOR-Überlagerung durchgeführt wird.

Nach der Entschlüsselung der Daten in der Informationssicherungsschicht werden dann anschließend in der nachgeordneten Fehlersicherungsschicht im empfangenden Kommunikationsteilnehmer die Daten durch Anwendung des Prüfsummenverfahrens CRC daraufhin geprüft, ob die übertragene Prüfsumme FCS1 korrekt ist.

## Patentansprüche

1. Verfahren zum Übertragen von Daten in einem Feldbussystem zwischen wenigstens zwei Kommunikationsteilnehmern, die jeweils eine Sicherheitsschicht mit einer Fehlersicherungsschicht, die Daten gegen zufällige Datenübertragungsfehler sichert, und einer Informationssicherheitsschicht, die gegen Manipulation von Daten und/oder gegen unautorisiertes Lesen von Daten sichert, aufweisen, wobei die Daten jedes übertragenen Datenpakets im sendenden Kommunikationsteilnehmer zuerst die Fehlersicherungsschicht und dann die Informationssicherheitsschicht und im empfangenden Kommunikationsteilnehmer zuerst die Informationssicherheitsschicht und dann die Fehlersicherungsschicht durchlaufen, und
wobei die Informationssicherheitsschicht zweiteilig ausgelegt ist,
**dadurch gekennzeichnet,**
**dass** in der Informationssicherungsschicht des sendenden Kommunikationsteilnehmers erst ein Verschlüsseln der in der Fehlersicherungsschicht verarbeiteten Daten durchgeführt wird und dann ein Authentifikationsprüfwert der verschlüsselten Daten berechnet wird, der mit übertragen wird, und
**dass** in der Informationssicherungsschicht des empfangenden Kommunikationsteilnehmers erst ein weiterer Authentifikationsprüfwert der empfangenen Daten berechnet wird, um durch Auswertung des weiteren Authentifikationsprüfwerts und des übertragenen Authentifikationsprüfwerts eine Aussage über die Datenintegrität zu erhalten, und dann ein Entschlüsseln der empfangenen Daten durchgeführt wird,
wobei in der Informationssicherungsschicht des sendenden Kommunikationsteilnehmers zum Verschlüsseln und zum Authentifizieren zwei disjunkte Partitionen eines pseudozufälligen Schlüsselstroms verwendet werden, und
wobei in der Informationssicherungsschicht des empfangenden Kommunikationsteilnehmers zum Entschlüsseln und zum Authentifizieren die zwei disjunkten Partitionen des pseudozufälligen Schlüsselstroms verwendet werden.

2. Verfahren nach Anspruch 1, **dadurch gekennzeichnet, dass** der pseudozufällige Schlüsselstrom mit einem Algorithmus aus einem Schlüssel oder einem internen Zustand abgeleitet wird.

3. Verfahren nach Anspruch 1 oder 2, **dadurch gekennzeichnet, dass** in der Informationssicherungsschicht des sendenden Kommunikationsteilnehmers mit der ersten Partition des pseudozufälligen Schlüsselstroms die in der Fehlersicherungsschicht verarbeiteten Daten XOR-überlagert werden und mit der zweiten Partition des pseudozufälligen Schlüsselstroms unter Anwendung eines Authentifikations-Berechnungsverfahrens der Authentifikationsprüfwert berechnet wird.

4. Verfahren nach einem der Ansprüche 1 bis 3, **dadurch gekennzeichnet, dass** die Fehlersicherungsschicht des sendenden Kommunikationsteilnehmers für die zu sendenden Daten nach einem vorgegebenen Prüfsummenberechnungsverfahren eine Prüfsumme bestimmt, die dann ebenfalls übertragen wird, wobei die Fehlersicherungsschicht des empfangenden Kommunikationsteilnehmers ein entsprechendes Verfahren auf die empfangenen Daten und die Prüfsumme anwendet, um Datenübertragungsfehler zu erkennen.

5. Verfahren nach einem der Ansprüche 1 bis 4, **dadurch gekennzeichnet, dass** die zwei Kommunikationsteilnehmer jeweils eine Feldbusschicht aufweisen, wobei in der Feldbusschicht des sendenden Kommunikationsteilnehmers die in der Informationssicherungsschicht verarbeiteten Daten in ein auf dem Feldbussystem verwendetes Übertragungsprotokoll umgesetzt werden, und wobei in der Feldbusschicht des empfangenden Kommunikationsteilnehmers die übertragenen Daten aus dem auf dem Feldbussystem verwendeten Übertragungsprotokoll zurück umgesetzt werden und an die Informationssicherungsschicht zur Weiterverarbeitung übergeben werden.

6. Kommunikationsteilnehmer für ein Feldbussystem zum Übertragen von Daten, der eine Sicherheitsschicht mit einer Fehlersicherungsschicht, die Daten gegen Datenübertragungsfehler sichert, und eine Informationssicherheitsschicht, die gegen Manipulation von Daten und/oder gegen unautorisiertes Lesen von Daten sichert, aufweist und ausgelegt ist, die zu übertragenden Daten im Sendebetrieb zuerst mit der Fehlersicherungsschicht und dann mit der Informationssicherheitsschicht und im Empfangsbetrieb zuerst mit der Informationssicherheitsschicht und dann mit der Fehlersicherungsschicht zu verarbeiten, wobei die Informationssicherheitsschicht zweiteilig ausgelegt ist,
**dadurch gekennzeichnet,**
**dass** die Informationssicherungsschicht ausgelegt ist, im Sendebetrieb erst ein Verschlüsseln der in der Fehlersicherungsschicht verarbeiteten Daten durchzuführen und dann einen Authentifikationsprüfwert der verschlüsselten Daten zu berechnen, der mit übertragen wird,
die Informationssicherungsschicht ausgelegt ist, im Empfangsbetrieb erst einen weiteren Authentifikationsprüfwert der empfangenen Daten zu berechnen, um durch Auswertung des weiteren Authentifikationsprüfwerts und des übertragenen Authentifikationsprüfwerts eine Aussage über die Datenintegrität zu erhalten, und dann ein Entschlüsseln der empfangenen Daten durchzuführen,
**dass** die Informationssicherungsschicht ausgelegt ist, im Sendebetrieb zum Verschlüsseln und zum Authentifizieren zwei disjunkte Partitionen eines pseudozufälligen Schlüsselstroms zu verwenden, und
**dass** die Informationssicherungsschicht ausgelegt ist, im Empfangsbetrieb zum Entschlüsseln und zum Authentifizieren die zwei disjunkten Partitionen des pseudozufälligen Schlüsselstroms zu verwenden.

7. Kommunikationsteilnehmer nach Anspruch 6, **dadurch gekennzeichnet, dass** der pseudozufällige Schlüsselstrom mit einem Algorithmus aus einem Schlüssel oder einem internen Zustand abgeleitet wird.

8. Kommunikationsteilnehmer nach Anspruch 6 oder 7, **dadurch gekennzeichnet, dass** die Informationssicherungsschicht ausgelegt ist, im Sendebetrieb mit der ersten Partition des pseudozufälligen Schlüsselstroms die in der Fehlersicherungsschicht verarbeiteten Daten XOR zu überlagern und mit der zweiten Partition des pseudozufälligen Schlüsselstroms unter Anwendung eines Authentifikations-Berechnungsverfahrens den Authentifikationsprüfwert zu berechnen.

9. Kommunikationsteilnehmer nach einem der Ansprüche 6 bis 8, **dadurch gekennzeichnet, dass** die Fehlersicherungsschicht ausgelegt ist, im Sendebetrieb für die zu sendenden Daten nach einem vorgegebenen Prüfsummenberechnungsverfahren eine Prüfsumme zu bestimmen und im Empfangsbetrieb ein entsprechendes Verfahren auf die empfangenen Daten und die Prüfsumme anzuwenden.

10. Kommunikationsteilnehmer nach einem der Ansprüche 6 bis 9, **dadurch gekennzeichnet, dass** eine Feldbusschicht vorgesehen ist, die ausgelegt ist, im Sendebetrieb die in der Informationssicherungsschicht verarbeiteten Daten in ein auf dem Feldbussystem verwendetes Übertragungsprotokoll umzusetzen und im Empfangsbetrieb die übertragenen Daten aus dem auf dem Feldbussystem verwendeten Übertragungsprotokoll zurück umzusetzen und zur Weiterverarbeitung an die Informationssicherungsschicht zu übergeben.

11. Feldbussystem mit wenigstens zwei Kommunikationsteilnehmern nach einem der Ansprüche 6 bis 10, die über einen bidirektionalen Feldbus miteinander verbunden sind.

## Claims

1. Method for transmitting data in a field bus system between at least two communication subscribers that each have a security layer having an error protection layer, which protects data against random data transmission errors, and an information security layer, which protects against manipulation of data and/or against unauthorized reading of data,
wherein the data of each transmitted data packet transit first the error protection layer and then the information security layer in the sending communication subscriber and first the information security layer and then the error protection layer in the receiving communication subscriber, and wherein the information security layer is of two-part design,
**characterized**
**in that** in the information security layer of the sending communication subscriber, the data processed in the error protection layer are first encrypted and then an authentication test value for the encrypted data is computed and is transmitted as well, and
**in that** in the information security layer of the receiving communication subscriber, a further authentication test value for the received data is first computed, in order to obtain a statement about the data integrity by evaluating the further authentication test value and the transmitted authentication test value, and then the received data are decrypted,
wherein in the information security layer of the sending communication subscriber, two disjunct partitions of a pseudo-random key stream are used for encryption and for authentication, and
wherein in the information security layer of the receiving communication subscriber, the two disjunct partitions of the pseudo-random key stream are used for decryption and for authentication.

2. Method according to Claim 1, **characterized in that** the pseudo-random key stream is derived from a key or an internal state by using an algorithm.

3. Method according to Claim 1 or 2, **characterized in that** in the information security layer of the sending communication subscriber, the first partition of the pseudo-random key stream is used for XORing the data processed in the error protection layer and the second partition of the pseudo-random key stream is used to compute the authentication test value by applying an authentication computation method.

4. Method according to one of Claims 1 to 3, **characterized in that** the error protection layer of the sending communication subscriber uses a prescribed checksum computation method to determine, for the data that are to be sent, a checksum that is then likewise transmitted, wherein the error protection layer of the receiving communication subscriber applies an appropriate method to the received data and to the checksum in order to identify data transmission errors.

5. Method according to one of Claims 1 to 4, **characterized in that** the two communication subscribers each have a field bus layer, wherein in the field bus layer of the sending communication subscriber, the data processed in the information security layer are converted into a transmission protocol that is used on the field bus system, and wherein in the field bus layer of the receiving communication subscriber, the transmitted data are converted back from the transmission protocol used on the field bus system and are transferred to the information security layer for further processing.

6. Communication subscriber for a field bus system for transmitting data, which communication subscriber has a security layer having an error protection layer, which protects data against data transmission errors, and an information security layer, which protects against manipulation of data and/or against unauthorized reading of data, and is designed to process the data that are to be transmitted first with the error protection layer and then with the information security layer in send mode and first with the information security layer and then with the error protection layer in receive mode, wherein the information security layer is of two-part design,
**characterized**
**in that** the information security layer is designed so that, in send mode, it first encrypts the data processed in the error protection layer and then computes an authentication test value for the encrypted data, which authentication test value is transmitted as well,
the information security layer is designed so that, in receive mode, it first computes a further authentication test value for the received data, in order to obtain a statement about the data integrity by evaluating the further authentication test value and the transmitted authentication test value, and then decrypts the received data,
**in that** the information security layer is designed so that, in send mode, it uses two disjunct partitions of a pseudo-random key stream for encryption and for authentication, and
**in that** the information security layer is designed so that, in receive mode, it uses the two disjunct partitions of the pseudo-random key stream for decryption and for authentication.

7. Communication subscriber according to Claim 6, **characterized in that** the pseudo-random key stream is derived from a key or an internal state by using an algorithm.

8. Communication subscriber according to Claim 6 or 7, **characterized in that** the information security layer is designed so that, in send mode, it uses the first partition of the pseudo-random key stream to XOR the data processed in the error protection layer and uses the second partition of the pseudo-random key stream to compute the authentication test value by applying an authentication computation method.

9. Communication subscriber according to one of Claims 6 to 8, **characterized in that** the error protection layer is designed so that, in send mode, it uses a prescribed checksum computation method to determine a checksum for the data that are to be sent and, in receive mode, it applies an appropriate method to the received data and to the checksum.

10. Communication subscriber according to one of Claims 6 to 9, **characterized in that** a field bus layer is provided that is designed so that, in send mode, it converts the data processed in the information security layer into a transmission protocol that is used on the field bus system and, in receive mode, it converts the transmitted data back from the transmission protocol used on the field bus system and transfers them to the information security layer for further processing.

11. Field bus system having at least two communication subscribers according to one of Claims 6 to 10 that are connected to one another via a bidirectional field bus.

## Revendications

1. Procédé pour la transmission de données dans un système de bus de terrain entre au moins deux dispositifs d'usagers de communication qui présentent respectivement une couche de protection avec une couche de protection contre les erreurs, laquelle protège les données contre des erreurs accidentelles de transmission de données, et une couche de protection des informations, laquelle protège contre la manipulation de données et/ou contre la lecture non autorisée de données,
dans lequel les données de chaque paquet de données transmis dans le dispositif d'usager de communication émetteur passent tout d'abord par la couche de protection contre les erreurs et ensuite par la couche de protection des informations, et dans le dispositif d'usager de communication récepteur, d'abord par la couche de protection des informations et ensuite par la couche de protection contre les erreurs, et
dans lequel la couche de protection des informations est conçue en deux parties,
**caractérisé en ce que**
dans la couche de protection des informations du dispositif d'usager de communication émetteur, tout d'abord un chiffrement des données traitées dans la couche de protection des erreurs est effectué et ensuite, une valeur de contrôle d'authentification des données chiffrées est calculée, laquelle est transmise conjointement, et
**en ce que**, dans la couche de protection des informations du dispositif d'usager de communication récepteur, tout d'abord une autre valeur de contrôle d'authentification des données réceptionnées est calculée afin d'obtenir, grâce à l'évaluation de l'autre valeur de contrôle d'authentification et à la valeur de contrôle d'authentification transmise, un renseignement sur l'intégrité des données, et un déchiffrement des données réceptionnées est ensuite effectué,
dans lequel, dans la couche de protection des informations du dispositif d'usager de communication émetteur, deux partitions disjointes d'un flux chiffré pseudo-aléatoire sont utilisées pour le chiffrement et l'authentification, et
dans lequel, dans la couche de protection des informations du dispositif d'usager de communication récepteur, les deux partitions disjointes du flux chiffré pseudo-aléatoire sont utilisées pour le déchiffrement et pour l'authentification.

2. Procédé selon la revendication 1, **caractérisé en ce que** le flux chiffré pseudo-aléatoire est déduit avec un algorithme à partir d'une clé ou d'un état interne.

3. Procédé selon la revendication 1 ou 2, **caractérisé en ce que**, dans la couche de protection des informations du dispositif d'usager de communication émetteur, les données traitées dans la couche de protection contre les erreurs sont soumises à une superposition XOR avec la première partition du flux chiffré pseudo-aléatoire, et la valeur de contrôle d'authentification est calculée avec la deuxième partition du flux chiffré pseudo-aléatoire en utilisant un procédé de calcul d'authentification.

4. Procédé selon l'une des revendications 1 à 3, **caractérisé en ce que** la couche de protection contre les erreurs du dispositif d'usager de communication émetteur détermine un total de contrôle selon un procédé de calcul de total de contrôle prescrit pour les données à envoyer, lequel est alors également transmis, dans lequel la couche de protection contre les erreurs du dispositif d'usager de communication récepteur utilise un procédé correspondant pour les données réceptionnées et le total de contrôle afin de reconnaître des erreurs de transmission de données.

5. Procédé selon l'une des revendications 1 à 4, **caractérisé en ce que** les deux dispositifs d'usagers de communication présentent respectivement une couche de bus de terrain, dans lequel, dans la couche de bus de terrain du dispositif d'usager de communication émetteur, les données traitées dans la couche de protection des informations sont soumises à une conversion dans un protocole de transmission utilisé dans le système de bus de terrain, et dans lequel, dans la couche de bus de terrain du dispositif d'usager de communication récepteur, les données transmises sont soumises à une annulation de la conversion hors du protocole de transmission de données utilisé dans le système de bus de terrain, et sont transmises à la couche de protection des informations pour la suite du traitement.

6. Dispositif d'usager de communication pour un système de bus de terrain pour la transmission de données, lequel présente une couche de sécurité avec une couche de protection contre les erreurs, laquelle protège des données contre des erreurs de transmission de données, et une couche de protection des informations, laquelle protège contre la manipulation de données et/ou contre la lecture non autorisée de données, et lequel est conçu, en mode d'émission, pour traiter les données à transmettre d'abord avec la couche de protection contre les erreurs et ensuite avec la couche de protection des informations, et en mode de réception, d'abord avec la couche de protection des informations et ensuite avec la couche de protection contre les erreurs, la couche de protection des informations étant conçue en deux parties,
**caractérisé en ce que**
la couche de protection des informations est conçue, en mode d'émission, pour d'abord effectuer un chiffrement des données traitées dans la couche de protection contre les erreurs et pour ensuite calculer une valeur de contrôle d'authentification des données chiffrées, laquelle est transmise conjointement,
la couche de protection des informations est conçue, en mode de réception, pour d'abord calculer une autre valeur de contrôle d'authentification des données réceptionnées afin d'obtenir, grâce à l'évaluation de l'autre valeur de contrôle d'authentification et de la valeur de contrôle d'authentification transmise, un renseignement sur l'intégrité des données, et pour effectuer ensuite un déchiffrement des données réceptionnées,
**en ce que** la couche de protection des informations est conçue, en mode d'émission, pour le chiffrement et pour l'authentification de deux partitions disjointes d'un flux chiffré pseudo-aléatoire, et
**en ce que** la couche de protection des informations est conçue, en mode de réception, pour le déchiffrement et pour l'authentification, pour utiliser les deux partitions disjointes du flux chiffré pseudo-aléatoire.

7. Dispositif d'usager de communication selon la revendication 6, **caractérisé en ce que** le flux chiffré pseudo-aléatoire est déduit avec un algorithme à partir d'une clé ou d'un état interne.

8. Dispositif d'usager de communication selon la revendication 6 ou 7, **caractérisé en ce que** la couche de protection des informations est conçue, en mode d'émission, pour soumettre les données traitées dans la couche de protection contre les erreurs à une superposition XOR avec la première partition du flux chiffré pseudo-aléatoire, et pour calculer la valeur de contrôle d'authentification avec la deuxième partition du flux chiffré pseudo-aléatoire en utilisant un procédé de calcul d'authentification.

9. Dispositif d'usager de communication selon l'une des revendications 6 à 8, **caractérisé en ce que** la couche de protection contre les erreurs est conçue, en mode d'émission, pour déterminer, pour les données à envoyer, un total de contrôle selon un procédé de calcul de total de contrôle prescrit, et en mode de réception, pour appliquer un procédé correspondant aux données réceptionnées et au total de contrôle.

10. Dispositif d'usager de communication selon l'une des revendications 6 à 9, **caractérisé en ce que** l'on prévoit une couche de bus de terrain qui est conçue, en mode d'émission, pour convertir les données traitées dans la couche de protection des informations dans un protocole de transmission utilisé dans le système de bus de terrain et en mode de réception, pour annuler la conversion des données transmises hors du protocole de transmission utilisé dans le système de bus de terrain, et pour les transmettre à la couche de protection des informations pour la suite du traitement.

11. Système de bus de données avec au moins deux dispositifs d'usagers de communication selon l'une des revendications 6 à 10, lesquels sont reliés ensemble via un bus de terrain bidirectionnel.
